# EUROPEAN PATENT SPECIFICATION

(11) **EP 0 418 838 B1**
(45) Date of publication and mention of the grant of the patent: **08.02.1995**
(21) Application number: 90117967.1
(22) Date of filing: 18.09.1990
(51) Int. Cl.: F16H 45/02, F16F 15/12

(54) **A metal mold for plastic working a differential pinion and a method for plastic working with the metal mold**
Metallmatrize zum plastischen Umformen eines Differentialritzels und Verfahren zum plastischen Umformen mit der Matrize
Moule métallique pour le moulage d'un pignon de différentiel par déformation plastique et procédé de moulage par déformation plastique avec ce moule métallique

(30) Priority: 19.09.1989 JP 242517/89
(43) Date of publication of application: 27.03.1991
(73) Proprietor: M. H. CENTER LIMITED, Misato-shi Saitama-ken (JP); Aida Engineering Ltd., Sagamihara-shi, Kanagawa-ken (JP)
(72) Inventor: Aoyama, Susumu, Kashiwa-shi, Chiba-ken (JP); Ishinaga, Nobuyuki, Sagamihara-shi, Kanagawa-ken (JP); Kobayashi, Kazuto, Sagamihara-shi, Kanagawa-ken (JP)
(74) Representative: Kern, Wolfgang, Dipl.-Ing.

(56) References cited:
- EP-A- 0 020 228
- EP-A- 0 275 561
- FR-A- 1 148 184
- FR-A- 2 098 261
- GB-A- 2 056 894

## Description

The present invention relates to a metal mold for plastic working a differential pinion having a plurality of teeth, wherein each tooth comprises an uncut, unground end relief face substantially parallel to the gear axis of rotation and intersecting with a cone distance large end face, and along a line with a tooth face, the tooth face and the end relief face each having continuous fiber flow, the fibers being longitudinally aligned in such a manner that they are parallel to the tooth face and the end relief face substantially at all points therealong, to thereby improve tooth contact and reduce noise and pitting of teeth wihout requiring grinding or cutting with the pinion after forming thereof, and a method for plastic working with the above metal mold.

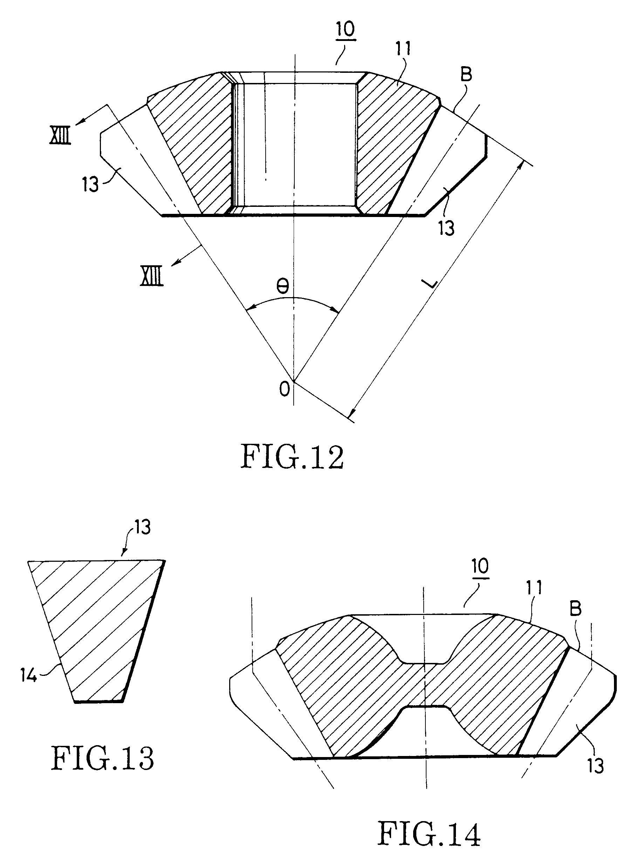

Fig. 12 to Fig. 21 of the attached drawings show a conventional differencial pinion 10 which is used in differential gears for automobiles and others. This differential pinion 10 is formed by having a tooth section 13 formed on the outer periphery of a gear body 11. And in Fig. 12, a pitch angle is indicated by Θ and a distance from a cone vertex O to a cone distance large end face B by L. Fig. 13 shows a sectional view taken on line XIII-XIII of the tooth section 13 in Fig. 12.

Heretofore, the above differential pinion 10 has its tooth face 14 formed by cutting work (see Fig. 12) or plastic working (see Fig. 14).

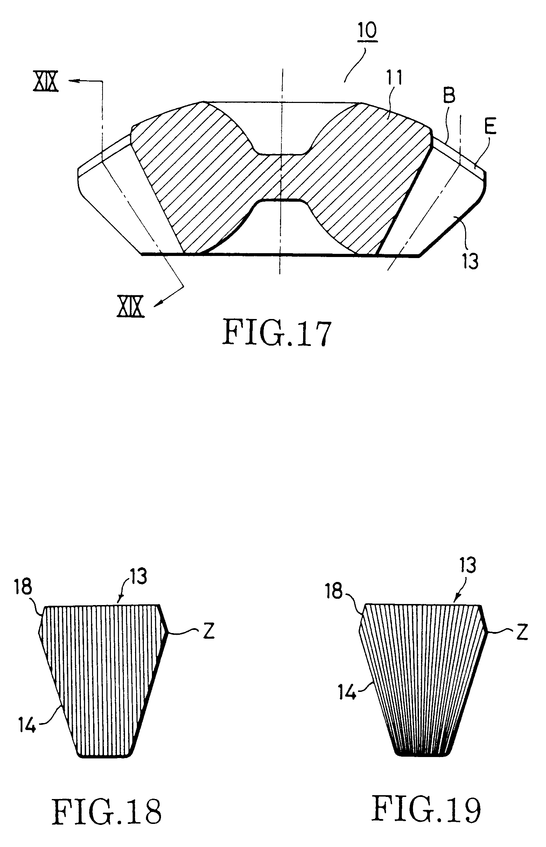

Lately, an end relief section may be provided on the cone distance large end face of the tooth face which is formed by cutting or plastic working to remove the contact of the above large end face and to reduce noise. Fig. 16 and Fig. 17 show differential pinions which are provided with end relief sections E.

Heretofore, the end relief sections E have been formed by cutting work.

As shown in Fig. 14, the production of the differential pinion 10 by plastic working uses a closed forging which does not produce an excess wall which protrudes out of the cone distance large end face B, which is required to be removed by processing at the completion of forming the pinion.

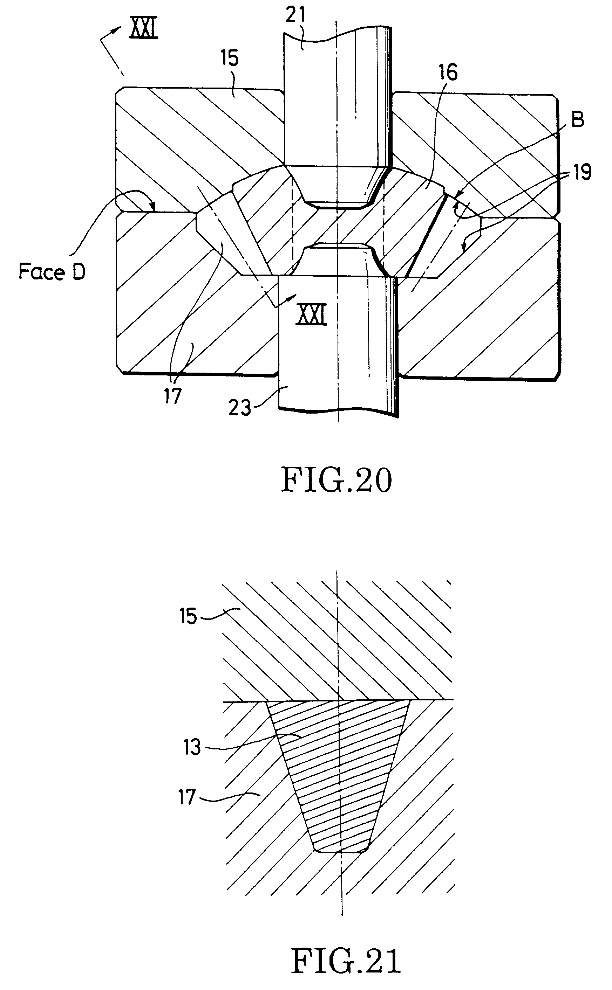

Fig. 20 shows a closed forging metal mold to be used for closed forging. In this metal mold the lower part of a cope 15 and the upper part of a drag 17 are provided with a shaped section 19 for plastic working a differential pinion 16. The cope 15 has a punch 21 inserted therein, and the drag 17 a counter punch 23 therein.

In the above closed forging metal mold, the cope 15 and the drag 17 are preliminarily pressed and with the cope 15 and the drag 17 securely held, the punch 21 and the counter punch 23 are inserted, thereby capable of producing the differential pinion 16 not having an excess wall protruded out of the cone distance large end face B which is required to be removed by alter treatment.

But, in the conventional differential pinion 10 shown in Fig. 12 and Fig. 14, the tooth section 13 has a working face covering the cone distance large end face B against a mating gear, inducing a drawback of making readily noise.

In the differential pinion 10 which is provided with an end relief face 18 shown in Fig. 16, when the tooth face 14 is formed by cutting work and then the end relief face 18 is formed by cutting work, fiber flow is disrupted at the tooth face 14 as shown in Fig. 18. Particularly, there is a drawback that separation and other defects readily occur at boundary point Z between the end relief face 18 and the tooth face 14. And, when the end relief face 18 is formed by cutting work alter having produced the tooth face 14 by plastic working, fiber flow is also disrupted as shown in Fig. 19, causing a drawback such as separation at about the boundary point Z.

The closed forging metal mold shown in Fig. 20 has a mold separation surface at the cone distance large end face B, which is positioned higher than the horizontal separation surface (surface D in the figure), and therefore the metal mold has poor strength and rigidity resulting in a partial elastic deformation thereof. As shown in Fig. 21, it is substantially impossible to prevent the production of burrs in a space 19 between the cope 15 and the drag 17 and remedy an insufficient wall thickness within the space 19. As a result, the differential pinion produced has drawbacks insofar as it has a tight tooth contact at around the cone distance large end face B and readily makes noise.

The object to be solved by the invention is to remedy the existing drawbacks mentioned above. In this connection the present invention aims to provide a metal mold for plastic working the above differential pinion, and a method for plastic working with the above metal mold.

The solution of this object is given by a metal mold which comprises a die which has, on the side of a cone vertex O with a face A as a boundary, which face A includes said line and is almost parallel to the cone distance large end face, a space for producing a certain tooth shape and, on the side of a punch with the face A as a boundary, a space formed by a face parallel to the gear axis of rotation containing line A, continued to the open end on the punch side and corresponding to the shape of the end relief face of the pinion, which punch fitted with the die is provided with a face parallel to the gear axis of rotation containing the line A and with a portion facing the die and having a shape corresponding to the cone distance large end face B.

The solution concerning the method for plastic working with the plastic working metal mold is characterized therein that the punch has its portion facing the die inserted to a desired cone distance large end face B in the die to produce the tooth face, the end relief face and the cone distance large end face B simultaneously.

Thus, the differential pinion with continuous fiber flow of the tooth face and the end relief can be produced easily and surely.

The present invention will be explained in further detail with reference to the attached drawings.

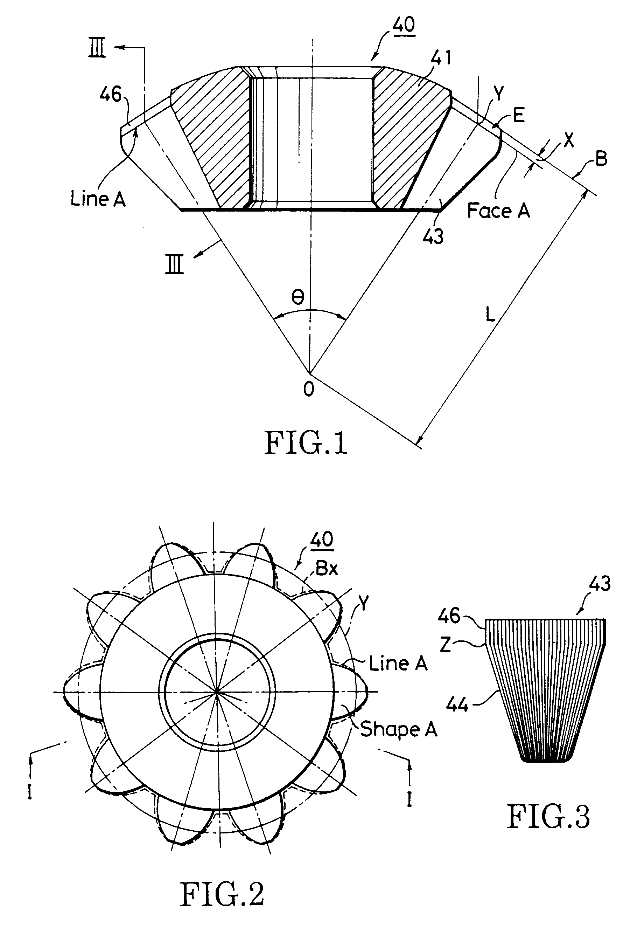

- Fig. 1: is a longitudinal sectional view of one embodiment of the differential pinion of the present invention taken on line I-I of Fig. 2.
- Fig. 2: is a top view of the differential pinion of Fig. 1.
- Fig. 3: is a longitudinal sectional view of a fiber flow taken on line III-III of Fig. 1.

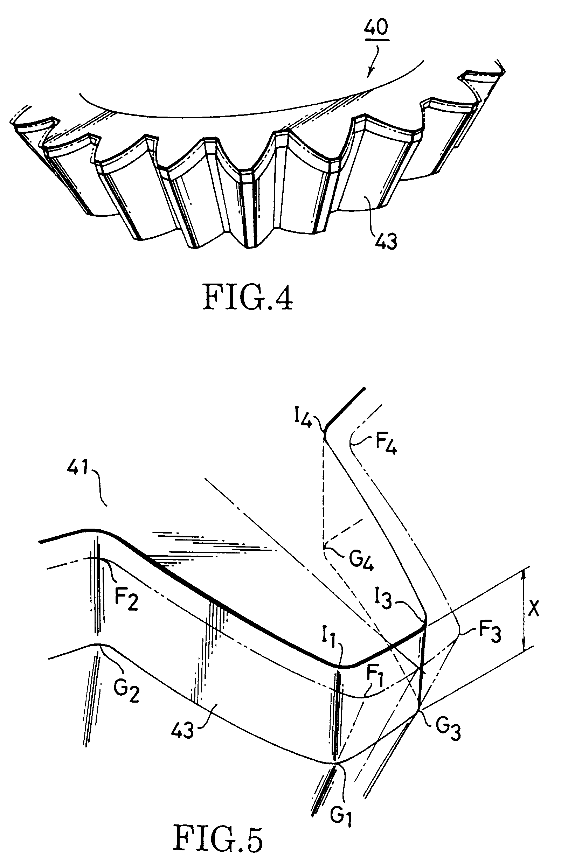

- Fig. 4: is a perspective view of the principal part of Fig. 1.
- Fig. 5: is an enlarged perspective view of the principal part of Fig. 4.

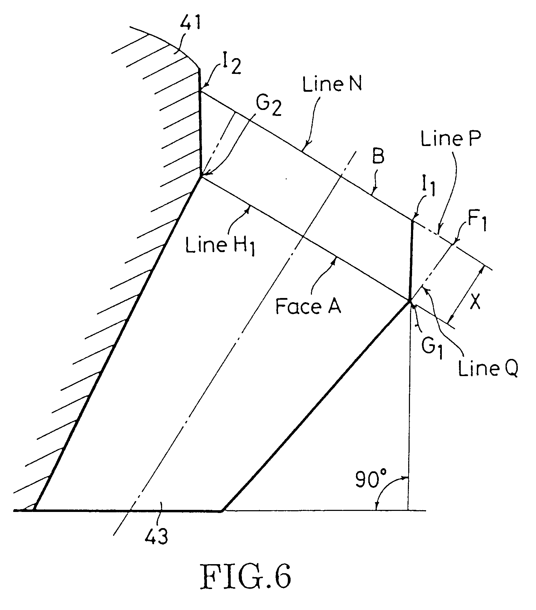

- Fig. 6: is an enlarged sectional view of the principal part of Fig. 4.

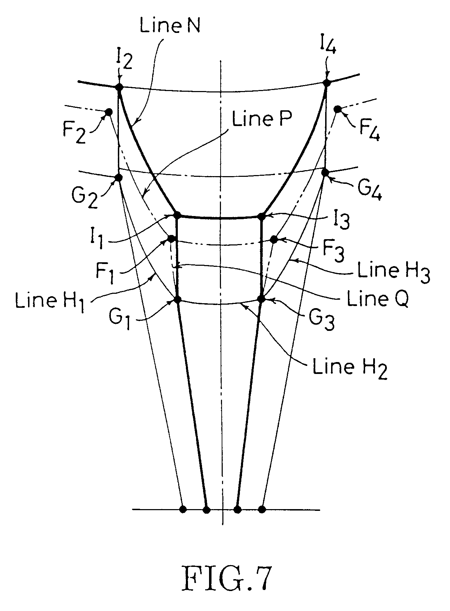

- Fig. 7: is an enlarged front view of the principal part of Fig. 4.

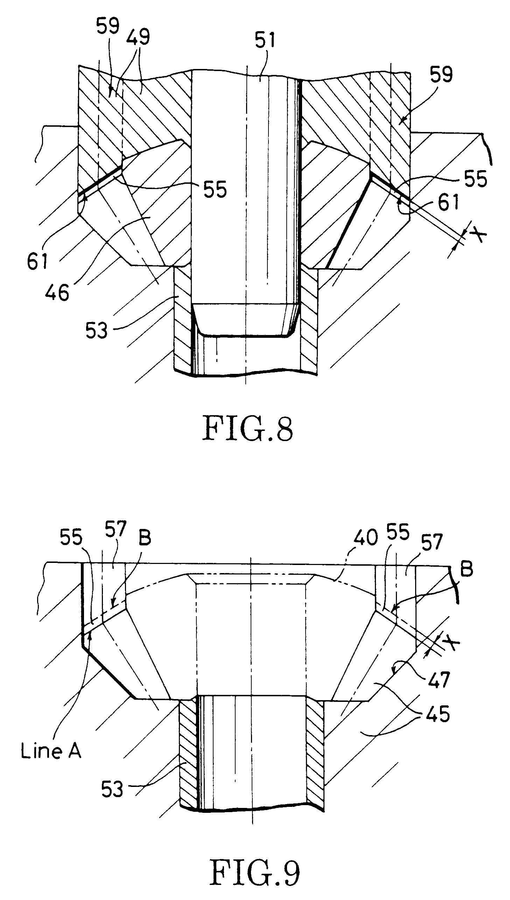

- Fig. 8: is a longitudinal sectional view of one embodiment of the plastic working metal mold for the differential pinion of the present invention.
- Fig. 9: is a longitudinal sectional view of a die of the plastic working metal mold for the differential pinion of Fig. 8.

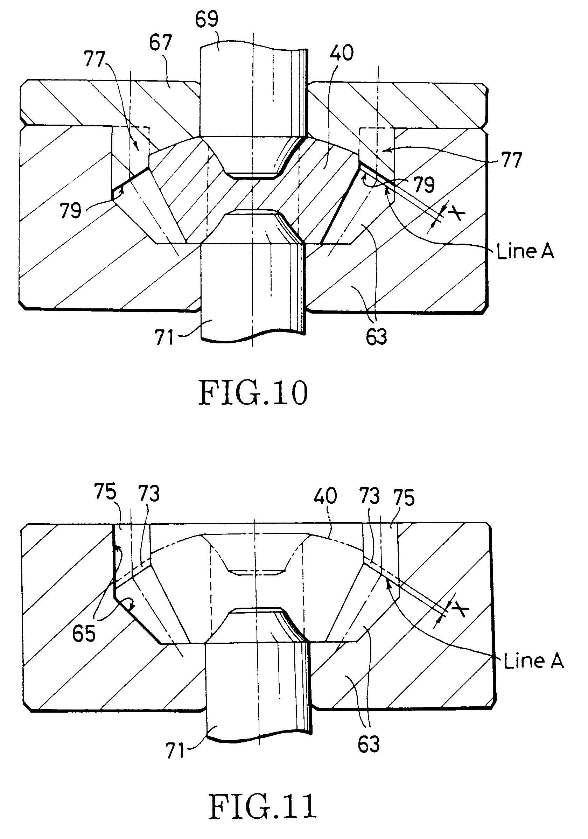

- Fig. 10: is a longitudinal sectional view of another embodiment of the plastic working metal mold for the differential pinion of the present invention.
- Fig. 11: is a longitudinal sectional view of a die of the plastic working metal mold for the differential pinion of Fig. 10.
- Fig. 12: is a longitudinal sectional view of one embodiment of conventional differential pinions procuded by cutting the tooth face.
- Fig. 13: is a longitudinal sectional view taken on line XIII-XIII of Fig. 12.
- Fig. 14: is a longitudinal sectional view of one embodiment of conventional differential pinions produced by having the tooth face plastic-worked.

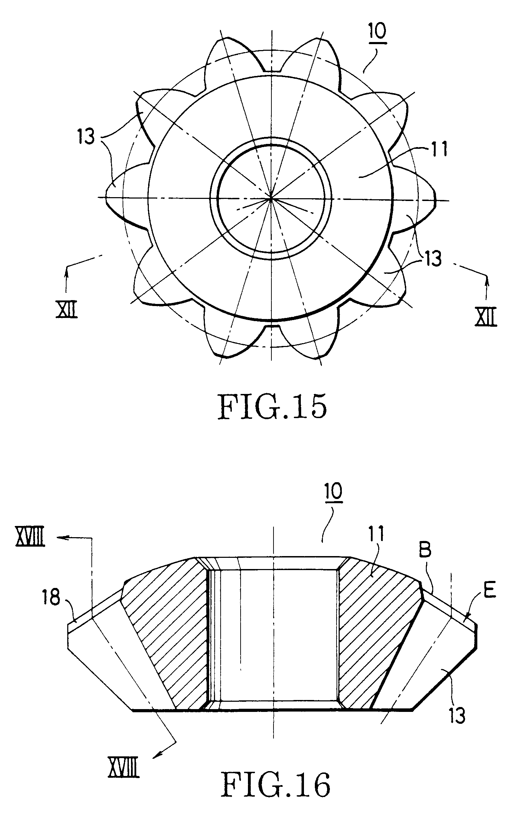

- Fig. 15: is a top view of the differential pinion of Fig. 12 and Fig. 13.
- Fig. 16: is a longitudinal sectional view of one embodiment of conventional differential pinions produced by having the end relief section formed on the differential pinion which has the tooth face of Fig. 12 formed by cutting.
- Fig. 17: is a longitudinal sectional view of one embodiment of conventional differential pinions produced by having the end relief section formed on the differential pinion which has the tooth face of Fig. 14 formed by plastic working.
- Fig. 18: is a longitudinal sectional view of fiber flow taken on line XVIII - XVIII of Fig. 16.
- Fig. 19: is a longitudinal sectional view of fiber flow taken on line XIX - XIX of Fig. 17.
- Fig. 20: is a longitudinal sectional view of a conventional plastic working metal mold for a conventional differential pinion.
- Fig. 21: is a longitudinal sectional view taken on line XXI-XXI of Fig. 20.

Fig. 1 to Fig. 7 illustrate one embodiment of the differential pinion of the present invention. In the figures, a differential pinion 40 has a tooth section 43 formed on the outer periphery of a gear body 41.

And a pitch angle is determined to be Θ and a distance from a cone vertex O to a cone distance large end face B be L. In Fig. 2, Y indicates a line where a pitch angle Θ and face A of Fig. 1 intersect.

In this embodiment, a surface, or the face A, which is almost parallel to the cone distance large end face B is formed in position closed to the cone vertex O by a certain distance X, e.g. about 1 mm, from the cone distance large end face B of the tooth section 43 formed on the gear body 41. This face A, as shown in Fig. 5 to Fig. 7, consists of lines H₁ to H₃ shich intersect a normal tooth profile on the face brought close to the differential pinion center (cone vertex O) in parallel to the cone distance large end face B. The figures illustrate G₁ to G₃ where the lines H₁ to H₃ intersect the formal tooth profile.

Distance X is suitably determined depending on the shape, size and application of the differential pinion but shall correspond to the size of the end relief section E.

A border line formed on a tooth face 44 by the face A and the tooth shape of tooth section 43 is determined to be line A. And an end relief face 46 is structured by part of the face parallel to the gear axis of rotation including the line A between the face A and the cone distance large end face B. The outline of the cone distance large end face B of the formal tooth shape is determined to be line P whose intersections with the tooth line are indicated by F₁ to F₃. In Fig. 6 and Fig. 7, a line which is assumed to be moved up away from and in parallel with lines H₁ to H₃ and with tooth axis and intersectied with the cone distance large end face B is determined to be line N, and its intersections be I₁ to I₃. The shape line indicated by lines H₁ to H₃ has an identical shape with that shown by line N. That is, the line N exists within the line P which shows the formal tooth shape.

Thus, for to the shape of the end relief section E which is generally not particularly specified, it can be proved that the face parallel to the gear axis of rotation including line A set by the inventor, fully satisfies the function as the end relief section. More specifically, in combination with the metal mold structure and plastic molding method to be described afterward, the fiber flow of the material inherently existing in parallel to the axis, as shown in Fig. 3, runs on the surface and interior from the tooth face 44 to the end relief face 46 via branch point Z for the differential pinion of the present invention. Therefore, the differential pinion of this embodiment reduces noise and has less defects such as pitting.

Fig. 8 and Fig. 9 show one embodiment of the plastic working metal mold for forming the above differential pinion. In this mold, as shwon in Fig. 9 a space 47 is provided for plastic working the differential pinion 40 at the upper part of the die 45, and a punch 49 and a mendrel 51 are inserted in the upper part of the die 45, and a counter punch 53 in the lower part of the die 45.

And since the die 45 is provided with a space 57 opened toward the punch 49 side and continued from a space 55 corresponding to the shape of the end relief section E, as a space for forming a part between the face A and the cone distance large end face B.

The punch 49 has a part 59 which is fitted with the space 57 and a face 61 having a shape corresponding to the cone distance large end face B to face the die 45.

Since the die 45 and the punch 49 are two-dimensionally fitted with each other, they have freedom in their relative position in the axial direction of the die 45 and the punch 49. Thus, precision at this part may be allowed not to be very high, and positioning of the punch 49 in the axial direction under pressure stress becomes very easy.

Further, the die 45 may have its internal pressure working area set at a position below from the open end by a required distance, resulting in producing a metal mold with high rigidity and strength.

As describes above, into the die 45 having the space 55 for forming the end relief section E and communicated to the space 57 for forming the tooth face, the punch 49 is inserted by two-dimensional fitting through the open end on the side of the punch 49, so that its face 61 corresponding to the cone distance large end face B on the side of the die 45 is inserted to a desired cone distance large end face position in the die 45. Thus, the tooth face 44, the end relief face 46 and the cone distance large end face B are produced simultaneously. Thus, as shown in Fig. 1 and Fig. 3, the present invention provides a method to produce the differential pinion 40 which possesses the end relief section E and the continuous fiber flow of the tooth face 44 and the end relief face 46 readily, securely and inexpensively.

Fig. 10 shows another embodiment for producing the differential pinion of the present invention. The figure shows a closed forging metal mold to be used for closed forging. As shown in Fig. 11, a drag 63 is provided with a space 65 at its upper part for plastic working the differential pinion 40, a punch 69 inserted into a cope 67, and a counter punch 71 inserted into the drag 63.

In the drag 63, as a space to form a part between face A and cone distance large end face B, a space 73 is provided to correspond to an end relief section E, and following the space 73 is formed a space 75 open to the cope 67.

The cope 67 has a section 77 which fits with the space 75, and on the side of the drag 63 is formed a face 79 in the shape corresponding to the cone distance large end face B.

In such a closed forging metal mold, the internal pressure working area of the die 63 can be positioned deep from the open end by a distance required. Therefore, the metal mold to be obtained has high rigidity and strength.

## Claims

1. A metal mold for plastic working a differential pinion (40) having a plurality of teeth, wherein each tooth comprises an uncut unground end relief face (46) substantially parallel to the gear axis of rotation and intersecting with a cone distance large end face B, and along a line A with a tooth face (44), which tooth face and end relief face each having continuous fiber flow, the fibers being longitudinally aligned in such a manner that they are parallel to the tooth face (44) and the end relief face (46) substantially at all points therealong, to thereby improve tooth contact and reduce noise and pitting of teeth without requiring grinding or cutting with the pinion (40) after forming thereof, the metal mold comprising a die (45) which has, on the side of a cone vertex O with a face A as a boundary, which face A includes said line A and is almost parallel to the cone distance large end face B, a space (47) for producing a certain tooth shape and, on the side of a punch (49) with the face A as a boundary, a space (57) formed by a face parallel to the gear axis of rotation containing line A, continued to the open end on the punch side, and corresponding to the shape of the end relief face (46) of the pinion, which punch (49) fitted with the die (45) is provided with a face parallel to the gear axis of rotation containing the line A and with a portion facing the die and having a shape corresponding to the cone distance large end face B.

2. A method for plastic working with the plastic working metal mold according to claim 1, **characterized** in that the punch (49) has its portion facing the die inserted to a desired cone distance large end face B in the die (45) to produce the tooth face (44), the end relief face (46) and the cone distance large end face B simultaneously.

## Patentansprüche

1. Metallmatrize zum plastischen Umformen eines Differentialritzels (40) mit mehreren Zähnen, von denen jeder Zahn eine nicht gefräste, ungeschliffene stirnseitige Freigabefläche (46) aufweist, die im wesentlichen parallel zu der Zahnraddrehachse liegt und die große Stirnfläche B eines Kegels und entlang einer Linie A eine Zahnfläche (44) schneidet, wobei sowohl die Zahnfläche als auch die Freigabefläche einen kontinuierlichen Faserverlauf aufweist, bei dem die Fasern in Längsrichtung so ausgerichtet sind, daß sie parallel zu der Zahnfläche (44) und der Freigabefläche (46) liegen, und zwar im wesentlichen an jeder Stelle ihrer Erstreckung, um dadurch den Zahnkontakt zu verbessern und das Geräusch sowie die Abnutzung der Zähne zu reduzieren, ohne daß das Ritzel (40) nach seiner Formung geschliffen oder gefräst werden muß, wobei die Metallmatrize eine Gesenkform (45) aufweist, die auf der Seite einer kouischen Spitze O mit einer Fläche A als Begrenzung, die die genannte Linie A aufweist und fast parallel zu der großen Stirnfläche B eines Kegels ist, einen Raum (47) zur Erzeugung einer bestimmten Zahnform besitzt sowie auf der Seite eines Gesenkstößels (49) mit der Fläche A als Begrenzung einen Raum (57), der durch eine Fläche gebildet wird, die parallel zur Zahnraddrehachse verläuft und die Linie A enthält, sich zu dem offenen Ende auf der Gesenkstößelseite fortsetzt und der Form der stirnseitigen Freigabefläche (46) des Ritzels entspricht, und einen Abschnitt aufweist, der der Gesenkform zugewendet ist und eine Konfiguration besitzt, die der großen Stirnfläche B eines Kegels entspricht.

2. Verfahren zum plastischen Umformen mit der Metallmatrize nach Anspruch 1, **dadurch gekennzeichnet**, daß der Gesenkstößel (49) mit seinem Abschnitt, der der Gesenkform gegenüberliegt, auf eine gewünschte Entfernung der großen Stirnfläche B eines Kegels in die Gesenkform (45) eingefahren wird, um gleichzeitig die Zahnfläche (44), die stirnseitige Freigabefläche (46) und die große Stirnfläche B eines Kegels zu erzeugen.

## Revendications

1. Moule métallique pour le moulage par déformation plastique d'un pignon de différentiel (40) possédant un ensemble de dents, dans lequel chaque dent comprend une face de dépouille d'extrémité (46) non taillée, non rectifiée, sensiblement parallèle à l'axe de rotation du pignon, coupant une grande face d'extrémité génératrice de cône B, et coupant une face de dent (44) suivant une ligne A, lesquelles face de dent et face de dépouille d'extrémité présentent chacune une structure de fibres continues, les fibres étant alignées longitudinalement de façon qu'elles soient parallèles à la face (44) de dent et à la face de dépouille d'extrémité (46) pratiquement en tous leurs points, afin d'améliorer ainsi le contact entre les dents et de réduire le bruit et la formation de piqûres dans les dents sans qu'il soit nécessaire de rectifier ou de tailler le pignon (40) après son formage, le moule métallique comprenant une matrice (45) qui présente, du côté d'un sommet de cône O, un évidement (47) délimité par une face A, destiné à produire une certaine forme de dent, laquelle face A contient ladite ligne A et est presque parallèle à la grande face d'extrémité génératrice de cône B, et du côté d'un poinçon (49) un évidement (57) délimité par la face A, formé par une face parallèle à l'axe de rotation du pignon, contenant la ligne A, prolongée jusqu'à l'extrémité ouverte du côté du poinçon et correspondant à la forme de la face de dépouille d'extrémité (46) du pignon, lequel poinçon (49) adapté à la matrice (45) présente une face parallèle à l'axe de rotation du pignon, contenant la ligne A et présentant une partie faisant face à la matrice et ayant une forme correspondant à la grande face d'extrémité génératrice de cône B.

2. Procédé de travail plastique utilisant le moule métallique pour le moulage par déformation plastique selon la revendication 1, caractérisé en ce que la partie du poinçon (49) faisant face à la matrice est introduite dans la matrice (45) jusqu'à la grande face d'extrémité génératrice de cône B de façon à réaliser simultanément la face de dent (44), la face de dépouille d'extrémité (46) et la grande face d'extrémité génératrice de cône B.
